Europäisches Patentamt

European Patent Office

Office européen des brevets

(11) Publication number: **0 091 171**
**B1**

(12) **EUROPEAN PATENT SPECIFICATION**

(45) Date of publication of patent specification: **08.01.86**

(51) Int. Cl.⁴: **G 11 B 23/04**

(21) Application number: **83200467.5**

(22) Date of filing: **05.04.83**

(54) **Magnetic-tape cassette.**

(30) Priority: **06.04.82 NL 8201452**

(43) Date of publication of application:
**12.10.83 Bulletin 83/41**

(45) Publication of the grant of the patent:
**08.01.86 Bulletin 86/02**

(84) Designated Contracting States:
**AT BE CH DE FR GB IT LI NL SE**

(56) References cited:
**WO-A-81/00480**
**WO-A-81/01907**
**AT-A- 360 773**
**GB-A-1 501 075**
**GB-A-2 025 899**
**US-A-3 826 489**
**US-A-4 012 011**

(73) Proprietor: **N.V. Philips' Gloeilampenfabrieken**
**Groenewoudseweg 1**
**NL-5621 BA Eindhoven (NL)**

(72) Inventor: **Verhoeven, Robertus Jozefus Maria**
**c/o INT.OCTROOIBUREAU B.V. Prof. Holstlaan 6**
**NL-5656 AA Eindhoven (NL)**

(74) Representative: **Smit, Frederik Jan et al**
**INTERNATIONAAL OCTROOIBUREAU B.V. Prof.**
**Holstlaan 6**
**NL-5656 AA Eindhoven (NL)**

Courier Press, Leamington Spa, England.

EP 0 091 171 B1

## Description

The invention relates to a magnetic-tape cassette which comprises:

— a housing having two parallel substantially rectangular major walls, two side walls, a rear wall, and a front which is formed with apertures;

— two reels hubs which are arranged between the major walls and which are rotatable about axes which extend perpendicularly to the major walls;

— a magnetic tape connected at its ends to the reel hubs and, at least over a part of its length, is wound onto the reel hubs and which further extends across a recess in the front of the housing to co-operate with parts of a magnetic-tape cassette apparatus;

— sensing aperture in one of the walls near a corner of the housing for receiving a sensing element of the magnetic-tape cassette apparatus which is movable into the sensing aperture;

— an anti-erase member which is disposed at least partly inside the housing and which is slidable substantially rectilinearly between a first position and a second position, and can be latched in these positions;

— a control element which is integral with the anti-erase member, which element closes the sensing aperture in the first position and leaves said aperture free in the second position;

— an actuating element which is integral with the anti-erase member, which element is situated at the outer side of the housing and enables the anti-erase member to be shifted manually;

— a window in one of the walls of the housing, through which window the position of the anti-erase member is visually discernible;

— an indicator element which is integral with the anti-erase member, which element leaves the window open in the first position and covers the window in the second position.

A magnetic-tape cassette of this type is known from Netherlands Patent Application 7604174, which has been laid open to public inspection. On each of the two side walls, near the corner where the side wall adjoins the rear wall, this known magnetic-tape cassette comprises a brightly coloured anti-erase member which is movable parallel to the respective side wall. Each anti-erase member is constructed and arranged in such a way that, viewed at the back or rear wall of the housing of the magnetic-tape cassette, the control element, which has the same bright colour as all the other parts of the anti-erase member and when thus viewed forms a part which adjoins the major surface of the rear wall, is always distinctly visible both in the first position and in the second position of the anti-erase member. Moreover, the known magnetic-tape cassette has additional sensing apertures in the rear wall, at least one of the apertures being covered by a part of the anti-erase member so that in both positions of the anti-erase member the same bright colour is visible. The actuating element of the known cassette is integral with the control element and is also arranged in such a way that, viewed at the rear wall, it is conspicuous in both positions. Therefore, as a result of the arrangement of said parts of the anti-erase member, two parts of the member are always distinctly visible owing to the contrasting colour in any position of the member viewed at the rear wall of the cassette housing. Therefore, if the cassette is stored between other cassettes on a shelf in such a way that only the rear walls of the housings of the cassettes are visible, this is liable to lead to uncertainty when looking for a cassette which is suitable or not suitable for making a recording.

It is the object of the invention to provide a magnetic-tape cassette of said type, in which the position of the anti-erase member, which is wholly in a contrasting colour, is clearly visible when looking at the rear wall of the cassette.

To this end the invention is characterized in that the window is situated in the rear wall of the housing the sensing aperture is situated in a first major wall of the housing, a slot is formed at the outer side of the housing substantially between the adjoining edges of the first major wall and the rear wall, and the actuating element comprises a movable slide which has a non-smooth external surface, which is disposed in the slot and is disposed on the inner sides of the planes containing the outer surfaces of the first major wall and the rear wall.

In this way a magnetic-tape cassette is obtained whose rear wall exposes the anti-erase member so that, when, for example, the cassette is disposed between other cassettes on a shelf, it can be determined with certainty whether or not the relevant cassette is suitable for recording. Moreover, it remains possible to manufacture the anti-erase member integrally from a plastics material in a colour which contrasts strongly with the colour of the housing. As a result of the presence of the sensing aperture in the first major wall of the housing, the control element of the anti-erase member is visible only when looking at this major wall and *not* when looking at the rear wall.

Owing to the location of the actuating element and the slot substantially between the adjoining edges of the first major wall and the rear wall and the construction of the actuating element in the form of a movable slide disposed in the slot within the external contours of the housing, the actuating element will not give rise to uncertainty when only the rear wall is visible. As a result of the construction of the actuating element the major surface of the rear wall is interrupted only by the window. A further advantage of this arrangement of the actuating element is that it does not impede insertion of the cassette into a sleeve which exposes only the rear wall of the cassette housing. Despite the compact construction the movable slide with its non-smooth external surface is convenient to operate. As a result of the compact construction of the anti-erase member and the convenient actuation of the slide, the magnetic-tape cassette in accordance with the invention is particularly suitable for use in magnetic-tape cassette apparatus in which only a limited space is available for the cassette. An example of such a magnetic-tape cassette apparatus is a video camera with built-in magnetic-tape cassette apparatus.

A preferred embodiment of a magnetic-tape cassette in accordance with the invention is characterized in that the anti-erase member comprises a flat substantially rectangular plate which constitutes the indicator element and which is slidable along the inner side of the rear wall behind the window therein and which has a substantially rectangular aperture which in the first position of the anti-erase member coincides with the window and leaves the window completely open. This enables the anti-erase member to be injection-moulded in one piece and in one colour. During the sliding movement to the second position the aperture moves away from the window and a portion of the plate adjacent the aperture is brought behind the window. The construction with the rectangular aperture permits a comparatively robust construction of the plate, so that despite its compactness the anti-erase member can withstand rough usage.

In this respect a further embodiment of a magnetic-tape cassette in accordance with the invention is characterized in that the rectangular plate carries the slide on a first of its shorter sides, the plate being guided at said first shorter side by the slot between the adjoining edges of the first major wall and the rear wall and at the opposite second shorter side by a ridge on the second major wall. Thus, the anti-erase member in the cassette in accordance with the invention is readily movable owing to the presence of the guides and the member is effectively protected against, for example, impact forces when the cassette is dropped.

Also in connection with this a further embodiment of a magnetic-tape cassette in accordance with the invention is characterized in that the plate comprises first and second portions bordering two opposite sides of the rectangular aperture, of which portions the first is arranged to cover the window in the second position and has a greater dimension than the second plate portion in the direction of movement of the plate. This yields a construction adapted to the functions of the anti-erase member. The first plate portion serves for covering the window in the second position of the member, whilst the second plate portion ensures that the plate has an adequate rigidity despite the presence of the aperture.

In this respect a preferred embodiment of the magnetic-tape cassette in accordance with the invention is characterized in that at its first shorter side the rectangular plate carries a lug which constitutes the control element and which lies adjacent the inner side of the first major wall and is connected to the first plate portion by a support. As a result of the construction of the comparatively wide first plate portion the lug, on which a sensing element exerts a force when the cassette has been inserted into the apparatus, is nevertheless firmly connected to the plate.

In another preferred embodiment of the magnetic-tape cassette in accordance with the invention the second plate portion carries substantially halfway between the two major walls a projection, which can be positioned in grooves in the inner side of the rear wall for latching the anti-erase member in the first and second positions, which grooves extend from the edge of the rear wall adjoining the first major wall in a direction substantially perpendicular to the direction of movement of the plate. As a result of the smaller width of the second plate portion the projection is resiliently movable to some extent, whilst the latching grooves can be formed in the rear wall with a comparatively simple mould.

Still another embodiment of the magnetic-tape cassette in accordance with the invention is characterized in that an aperture is formed in the rear wall, through which aperture, in the second position of the anti-erase member, a pin can be inserted into the rectangular and positioned against a side of the rectangular aperture so as to prevent the plate from being moved out of the second position, whilst in the first position a longer side of a plate is disposed beside the aperture in the rear wall. In this way the aperture in combination with said rectangle side may serve as a stop for a pin. This prohibits inadvertent erasure. As a result of the shifted position of the plate no plate portion is visible through the aperture in the first position, so that the aperture will not confuse identification.

An embodiment of the invention will now be described in more detail, by way of example, with reference to the drawings.

Figure 1 is a mainly sectional view of a magnetic-tape cassette in accordance with the invention.

Figure 2 is a view of the rear wall of the cassette shown in Figure 1.

Figure 3 is a view, on an enlarged scale, of a part of the rear wall.

Figure 4 is a view of a part of the upper wall of the cassette indicated by the arrow IV in Figure 3.

Figure 5 is a sectional view of a part of the cassette taken on the lines V—V in Figure 3.

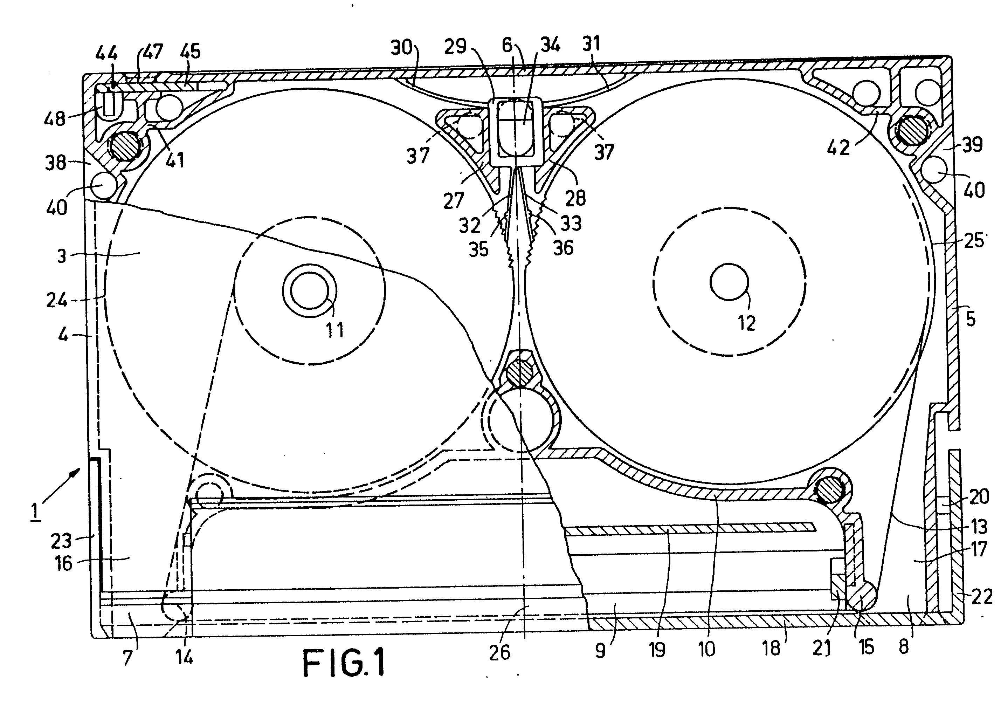

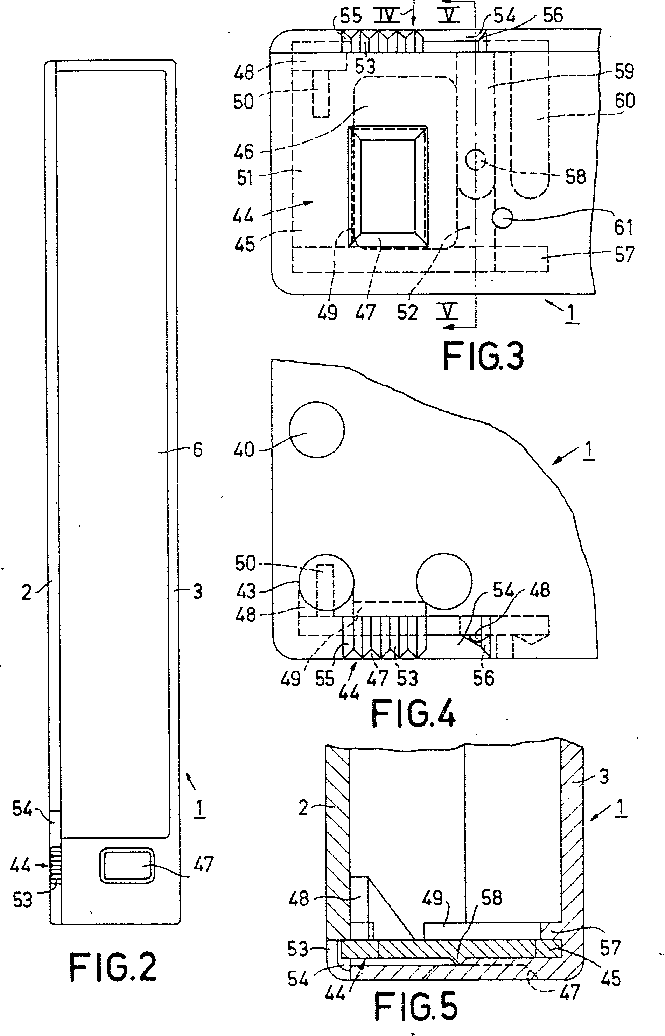

The magnetic-tape cassette 1 shown in Figures 1 and 2 comprises a housing of which a first substantially rectangular major wall 2 constitutes the cover and the second major wall 3, which is substantially parallel to said first major wall, constitutes the bottom. The housing further comprises two side walls 4 and 5 respectively, a rear wall 6 and a front which is formed with apertures 7 and 8 which are located adjacent the corners formed between the front of the housing and the side walls 4 and 5 respectively. At the front the housing has a recess which in the embodiment is formed by recesses in the front edges of the two major walls 2 and 3. A partition 10 separates the recess 9 from the interior of the housing to protect the interior against penetration of dust and contaminants and to give the housing an adequate resistance to flexual.

Inside the housing two reel hubs 11 and 12 are arranged between the major walls 2 and 3, which reel hubs are rotatable about axes which extend perpendicularly to the major walls. These reel hubs can be driven *via* apertures (not shown) in the major wall 2 by drive means, not shown, of a magnetic-tape cassette apparatus. The ends of a magnetic tape 13 are attached to the reel hubs, which tape, as is shown in Figure 1, is partially wound onto the hubs 11 and 12 to form rolls of tape thereon. On the ends of the partition 10 which are situated adjacent the front of the housing tape supports 14 and 15 are arranged. As is shown in Figure 1, when the cassette is in the operating position, a portion of the magnetic tape extends between the tape supports 14 and 15 across the front of the housing. Passages 16 and 17, which are disposed directly behind and terminate in the apertures 7 and 8 respectively, do not contain any tape-guide means except for the tape supports which are operative only when the cassette is not in its operating position. The tape supports 14 and 15 have only a passive function, namely to support the portion of the magnetic tape which extends across the front of the housing at the location of the recess 9. This portion of the magnetic tape is shielded by two flaps which are pivotally connected to the cassette housing, namely, an outer flap 18 which covers the tape at the outside of the housing and an inner flap 19 which protects the tape in the recess 9 at the side of the tape which faces the interior of the housing. The flap 18 is connected to the side walls 4 and 5 so as to be pivotable about journals 20, whilst the inner flap 19 is guided in slots in the partition 10 by means of pins 21. The flaps 18 and 19 are so coupled to each other, in a manner not shown, that when the outer flap 18 is swung open the inner flap 19 also is swung open. At their front ends, where the journals 20 are located the side walls 4 and 5 have portions which are slightly inwardly offset so that side walls 22 and 23 of the outer flap 18, when the flap is closed, are disposed in the planes of the major portions of the side walls 4 and 5, as can be seen in Figure 1. The two reel hubs 11 and 12 are each formed with a pair of flanges 24 and 25 respectively, between which the magnetic tape 13 is situated, the flanges 24 and 25 having serrated edges of sawtooth profile arranged so that the serrated edges of the flanges 24 are mirror images of the serrated edges of the flanges 25 relative to a plane of symmetry 26. On the inner side or the second major wall 3 are fixed two upright supports 27 and 28 which have curved walls concentric with the reel hubs 11 and 12 respectively, and which guide a mount 29 which, by means of leaf springs 30 and 31 that bear against the inner side of the rear wall 6, is resiliently urged away from the wall 6. The mount 29 carries two leaf-spring pawls 32 and 33, whose free ends, in the position shown in Figure 1, each abut the stop edge of one of the ratchet teeth by the serrations on the flange 24, 25 respectively, so that the flanges one thereby prevented from rotating about the axes of the reel hubs in directions to unwind the tapes from the hubs. Inside the mount 29 is an inclined surface 34 which is adapted to co-operate with a pin, not shown, on a magnetic-tape cassette apparatus, which pin, upon insertion of the cassette into the magnetic-tape cassette apparatus, moves the mount 29 towards the rear wall 6 against the force of the springs 30 and 31. During this movement, cam protrusions 35 and 36 on the leaf-spring pawls 32 and 33 cooperate with wall portions of the supports 27 and 28 so that the pawls 32 and 33, which are biassed away from each other by the resilience, are deflected towards each other during the movement towards the rear wall 6. As a result of the movement of the mount 29 towards the rear wall 6 the flanges 24 and 25, and consequently the respective reel hubs 11 and 12, can both rotate freely so that the drive means, not shown, of the apparatus can drive the reel hubs to wind the magnetic tape 13 onto one of the reel hubs from the other hub. The opposite occurs when the cassette is removed from the apparatus. The mount 29 then moves away from the rear wall 6 and the pawls 32 and 33 deflect away from each other after the cam protrusions 35 and 36 have left the supports 27 and 28. Immediately after this the free ends of the pawls 32 and 33 each abut the stop edge of one of the ratchet teeth on the flange 24, 25 respectively and as they move with the mount 29 further away from the rear wall 6 the pawls 32 and 33 rotate the flanges 24 and 25 in opposite directions and thereby take up any slack in the tape so that the tape is tautened across the front of the cassette housing between the tape supports 14 and 15. An advantage of the construction of the supports 27 and 28 is that they can each form a substantially right-angled triangle, so that space is available in the area between the walls of the triangle. Thus, a pair on apertures 37 may be formed in the first major wall 2 for co-operation with a sensor on the magnetic-tape cassette apparatus, which sensor can enter through the apertures 37 into the spaces within the substantially triangular supports 27 and 28.

In the side walls 4 and 5 cavities 38 and 39 are formed which are adapted to co-operate with a gripping mechanism, not shown, of a magnetic-tape cassette apparatus, which gripping mechanism is capable of moving the cassette into or out of the operating position in the apparatus. Such a gripping mechanism may, for example, form part of a cassette-changing device in the apparatus, intended for consecutively playing-back or making recordings on the tape in the cassette. The major walls 2 and 3 also extend at the location of the cavities 38 and 39, so that aperture 40 may be formed in the major walls, which apertures, in the same way as the apertures 37, can co-operate with sensing elements of the magnetic-tape cassette apparatus. This has the advantage that the cavities 38 and 39 both enable the cassette to be gripped and to be sensed.

Directly adjacent the cavities 38 and 39 two apertures are formed in two rear corner portions of the cassette housing. In the same way as for the apertures 37 and 40, the cassette housing is internally partitioned inwardly of these apertures to prevent the penetration of dust and contaminants *via* the apertures into the interior of the housing. For this purpose a partition 41 extends from the cavity 38 towards the rear wall 6 following the curvature of the periphery of the flange 24, whilst symmetrically with the partition 41 relative to the plane 26 a similar partition 42 extends from the cavity 39 towards the rear wall 6. The partition 41 together with an end portion of the rear wall 6 and an end portion of the side wall 4 bound a corner portion of the cassette housing which is shown in more detail in Figures 3, 4 and 5. Similarly, the partition 42 and end portions of the rear wall 6 and side wall 5 bond a further corner portion of the housing.

The corner portion shown in plan view in Figure 4 has a sensing aperture 43 in the first major wall 2 in the immediate vicinity of the junction between the side wall 4 and the rear wall 6. This aperture also serves for receiving a sensing element of a magnetic-tape cassette apparatus, which, if the aperture 43 is free, can be moved into, the aperture by this movement actuate an anti-erase device in the magnetic-tape cassette apparatus. If the aperture 43 is free the apparatus is prohibited from operating in the recording mode. To achieve this an anti-erase member 44 is arranged in the corner portion of the cassette housing, which member is situated mainly inside the cassette housing and is movable substantially rectilinearly between a first position and a second position. The anti-erase member 44 is injection-moulded in one piece from a material of a colour which contrasts strongly with the colour of the housing. The anti-erase member 44 comprises a flat substantially rectangular plate 45 which is shown in section in Figure 5 and which is indicated schematically by dotted lines in Figure 3. The plate 45 forms an indicator element for the position of the anti-erase member 44 and has a substantially rectangular aperture 46 whose sides extend substantially parallel to the edges of the plate 45. In the first position of the anti-erase member 44 shown in Figure 3, the plate 45, through the aperture 46, leaves a window 47 in the rear wall 6 of the housing completely open. Suitably, the window 47 (see also Figure 2) has bevelled edges. In this position of the anti-erase member a control element comprising a lug 48 closes the aperture 43, so that if the cassette is sensed by a sensing element of the apparatus the apparatus is allowed to make a recording in the first position of the anti-erase member. In this position of the anti-erase member, a wall 49 which extends from the second major wall 3 towards the first major wall 2 behind the window 47 on the side of the anti-erase member remote from the window and which has the same colour as the housing, preferably a dark colour, can be seen through the windows. The first position of the anti-erase member is thus visually discernible. The lug 48 is reinforced by a bracket 50 which extends perpendicularly to the plate 45 and which is connected to a first portion 51 of the plate 45. The plate portion 51 borders the rectangular aperture 46 at one side thereof whilst at the opposite side the rectangular aperture is bordered by a second plate portion 52 the plate portion 51, which serves to cover the window 47 in the second position of the anti-erase member, having a greater dimension in the direction of movement of the plate than the second plate portion 52. In this way the first plate portion 51 forms the actual indicator element of the plate 45.

On a first of the shorter sides of the rectangular plate 45 there is provided an actuating element formed by a slide 53 which is slidably disposed in a slot 54 formed at the outer side of the cassette housing between the adjoining edges of the first major wall 2 and the rear wall 6. It is to be noted the slot 54 may be formed in the major wall 2 in the immediate vicinity of the edge thereof at a small distance from the rear wall 6. The slot 54 is bounded at its ends by bevelled stop edges 55 and 56. These edges limit the movement of the slide 53, the slide abutting the stop edge 55 in the first position of the anti-erase member and the stop edge 56 in the second position. The slide 53 has a serrated external surface which is disposed in the inner sides of the planes containing the outer surfaces of the first major wall 2 and the rear wall 6, so that the slide 53 does not project beyond the external contours of the housing and despite its arrangement in the slot 54 is convenient to operate (see Figures 3 and 5). The slot 54 also constitutes a guide for the rectangular plate 45 at a first shorter side of the rectangular plate; at the opposite second shorter side of the rectangular plate 45 a guide is provided in the second major wall 3, which guide is formed by a ridge 57 which extends locally along the inner side of the wall 3 behind the window 47 and projects towards the major wall 2 in the plane of the wall 49. Thus, the plate 45 is arranged against the rear wall 6 so as to be slidable within guides in and on the respective major walls. Substantially halfway between the two major walls the second plate portion 52, comprises a projection 58 which latches the anti-erase member 44 in the two positions. For this purpose grooves 59 and 60 are formed in the inner side of the rear wall 6, in which groove the projection 58 can engage. The grooves suitably extend from the edge of the rear wall adjoining the first major wall 2 in a direction substantially perpendicular to the direction of movement of the plate 45 to a point some distance from the second major wall 3 (see Figure 3). The advantage of this shape is that the grooves can be simply formed in the rear wall by injection-moulding. Moreover, this simplifies mounting of the anti-erase member in the cassette housing.

In the rear wall 6 a further aperture 61 is formed through which, in the second position of the anti-erase member 44, a pin (not shown) can be inserted into the aperture 46 and positioned against a side of the aperture so as to prevent movements of the plate 45 from the second position to the first position. This ensures that a magnetic tape cassette containing a recording cannot be erased inadvertently because the anti-erase member cannot be moved to the first position in which recording is possible without removing the pin. An anti-erase member of the construction shown in the drawings and described in the foregoing has the great advantage that it requires comparatively little space inside the cassette housing. The relevant construction is particularly suitable for comparatively small magnetic tape cassettes as used in portable magnetic tape cassette equipment, for example a video camera with built-in cassette apparatus. As already stated, the construction has the advantage that it allows an anti-erase member to be manufactured in one piece with all parts of the member having the same colour, without this giving rise to mistakes when only the rear wall of the cassette is visible. As can be seen in Figures 2 and 3 the only aperture in the surface of the rear wall 6 is formed by the window 47, the aperture 46 of the anti-erase member 44 ensuring that the window is dark in the first position of the anti-erase member whereas in the second position thereof the window has a contrasting colour as a result of the presence of the first plate portion 51 of the anti-erase member behind the window. The aperture 61 in the rear wall 6 is also dark in the second position of the anti-erase member because the aperture 46 is then disposed behind the aperture 61 (Figure 3). Only at the side of the major surface of the rear wall 6 can a coloured portion of the anti-erase member 44 be seen, namely, the actuating element 53, but steps can be taken to ensure that this cannot give rise to mistakes when ascertaining whether the anti-erase member is in the first or in the second position. Suitably, the magnetic-tape cassette in accordance with the invention is inserted into a sleeve which exposes only the rear wall 6. It is then important that the cassette in accordance with the invention does not have any projections which could impede insertion into the sleeve. If the cassette is contained in the sleeve and is, for example placed in a book shelf between other cassettes, the user can see directly whether the relevant cassette is suitable for recording or not. The cassette in accordance with the invention precludes any form of uncertainty. In practice this is of great importance because the user generally has only a short time in which to decide which cassette may be used for recording or not.

It is to be noted that if the tape in a cassette is to be provided with recordings by a manufacturer, the cassette can simply be adapted to this purpose by dispensing with the anti-erase member 44 and forming an integral break-out tab across the aperture 43. This results in a universal cassette according to the invention after removing the relevant break-out tab from the aperture 43 and fitting the anti-erase member 44. By dispensing with the anti-erase member 44 the cassette can be used in conjunction with prerecorded magnetic tapes. In the last-mentioned case the manufacture may even use a label, to be applied to the rear wall 6, which extends across the window 47 or use the same contrasting colour on the label at the location of the window 47.

## Claims

1. A magnetic-tape cassette which comprises:
— a housing having two parallel substantially rectangular major walls (2, 3), two side walls (4, 5), a rear wall (6) and a front which is formed with apertures (7, 8);
— two reel hubs (11, 12) which are arranged between the major walls and which are rotatable about axes which extend perpendicularly to the major walls;
— a magnetic tape (13) which is connected at its ends to the reel hubs and, at least over a part of its length, is wound onto the reel hubs and which further extends across a recess (9) in the front of the housing to co-operate with parts of a magnetic-tape cassette apparatus;
— a sensing aperture (43) in one of the walls (2) near a corner of the housing for receiving a sensing element of the magnetic-tape cassette apparatus which is movable into the sensing aperture;
— an anti-erase member (44) which is disposed at least partly inside the housing and which is slidable substantially rectilinearly between a first position and a second position and can be latched in these positions;
— a control element (48) which is integral with the anti-erase member, which element closes the sensing aperture in the first position and leaves said aperture free in the second position;
— an actuating element (53) which is integral with the anti-erase member, which element is situated at the outer side of the housing and enables the anti-erase member to be shifted manually;
— a window (47) in one of the walls of the housing, through which window the position of the anti-erase member is visually discernible;
— an indicator element (45) which is integral with the anti-erase member, which element leaves the window open in the first position and covers the window in the second position;
characterized in that
— the window (47) is situated in the rear wall (6) of the housing,
— the sensing aperture (43) is situated in a first major wall of the housing,
— a slot (54) is formed at the outer side of the housing substantially between the adjoining edges of the first major wall (2) and the rear wall, and
— the actuating element (53) comprises a movable slide which is disposed in the slot and which has a non-smooth external surface which is disposed on the inner sides of the planes containing the outer surfaces of the first major wall (2) and the rear wall (6).

2. A magnetic-tape cassette as claimed in Claim 1, characterized in that the anti-erase member comprises a flat substantially rectangular plate (45) which constitutes the indicator element and which is slidable along the inner side of the rear wall (6) behind the window (47) therein and which has a substantially rectangular aperture (46) which in the first position of the anti-erase member coincides with the window and leaves the window completely open.

3. A magnetic-tape cassette as claimed in Claim 2, characterized in that the rectangular plate (45) carries the slide (53) on a first of its shorter sides, the plate being guided at said first shorter side by the slot (54) between the adjoining edges of the first major wall (2) and the rear wall (6) and at the opposite second shorter side by a ridge (57) on the second major wall (3).

4. A magnetic-tape cassette as claimed in Claim 2, or 3, characterized in that the plate (45) comprises first and second portions (51, 52) bordering two opposite sides of the rectangular aperture (46), of which portions the first is arranged to cover the window (47) in the second position and has a greater dimension than the second plate portion in the direction of movement of the plate.

5. A magnetic-tape cassette as claimed in Claims 3 and 4, characterized in that at its first shorter side the rectangular plate (45) carries a lug (48) which constitutes the control element and which lies adjacent the inner side of the first major wall (2) and is connected to the first plate portion (5) by a support (50).

6. A magnetic-tape cassette as claimed in Claim 4, characterized in that substantially halfway between the two major walls the second plate portion (52) carries a projection (58) which can be positioned in grooves (59, 60) in the inner side of the rear wall (2) for latching the anti-erase member (44) in the first and second positions, which grooves extend from the edge of the rear wall (6) adjoining the first major wall (2) in a direction substantially perpendicular to the direction of movement of the plate (45).

7. A magnetic-tape cassette as claimed in any of the Claims 4 to 6, characterized in that an aperture (61) is formed in the rear wall (6), through which aperture, in the second position of the anti-erase member (44), a pin can be inserted into the rectangular aperture and positioned against a side of the rectangular aperture so as to prevent the plate (45) from being moved out of the second position, whilst in the first position a longer side of the plate is disposed beside the aperture in the rear wall (6).

**Patentansprüche**

1. Magnetbandkassette mit
— einem Gehäuse mit zwei parallelen nahezu rechteckigen Hauptwänden (2, 3), zwei Seitenwänden (4, 5) einer Rückwand (6) und einer mit Öffnungen (7, 8) versehenen, Vorderseite,
— zwei zwischen den Hauptwänden angeordneten, nebeneinander liegenden, um senkrecht zu den Hauptwänden (2, 3) gerichteten Drehungsachsen drehbaren Wickelkernen (11, 12);
— einem an den Enden mit den Wickelkernen verbundenen Magnetband (13), das wenigstens über einen Teil der Länge um die Wickelkerne gewickelt liegt und sich weiterhin längs eine Öffnung (9) in der Vorderseite des Gehäuses erstreckt zum Zusammenarbeiten mit Teilen eines Magnetbandkassettengerätes;
— einer Abtastöffnung (43) in einer der Hauptwände (2) in der Nähe einer Ecke des Gehäuses zum Aufnehmen eines bis in die Abtastöffnung beweglichen Abtastelementes des Magnetbandkassettengerätes;
— einem wenigstens teilweise innerhalb des Gehäuses liegenden nahezu geradlinig zwischen einer ersten und einer zweiten Lage verschiebbaren und in diesen Lagen verriegelbaren Löschverriegelungselement (44);
— einem mit dem Löschverriegelungselement eine Einheit bildenden Steuerelement (48), das in der ersten Lage die Abtastöffnung absperrt und in der zweiten Lage die Abtastöffnung frei lässt;
— einem auf der Aussenseite des Gehäuses liegenden, mit dem Löschverriegelungselement eine Einheit bildenden Betätigungselement (53), das ein von Hand verschieben des Löschverriegelungselementesermöglicht;
— einem Fenster (47) in einer der Hauptwände des Gehäuses, durch das die Lage des Löschverriegelungselementes visuell erkennbar ist;
— einem mit dem Löschverriegelungselement eine Einheit bildenden Anzeigeelement (45) das in der ersten Lage das Fenster frei lässt und in der zweiten Lage das Fenster abdeckt;
dadurch gekennzeichnet, dass
— das Fenster (47) in der Rückwand (6) des Gehäuses liegt;
— die Abtastöffnung (43) in einer ersten Hauptwand des Gehäuses vorgesehen ist,
— ein Schlitz (54) auf der Aussenseite des Gehäuses in dem Anschlussrand der ersten Hauptwand (2) und der Rückwand gebildet ist und
— das Betätigungselement (53) einen beweglichen Schieber aufweist, der in dem Schlitz vorgesehen ist und dessen Aussenumfang innerhalb den Berührungsflächen an der ersten Hauptwand (2) und der Rückwand (6) liegt.

2. Magnetbandkassette nach Anspruch 1, dadurch gekennzeichnet, dass das Löschverriegelungselement eine flache im wesentlichen rechteckige Platte (45) aufweist, die das Anzeigeelement bildet und längs der inneren Seite der Rückwand (6) hinter dem Fenster (47) in dieser Wand schiebbar ist, und eine im wesentlichen rechteckige Öffnung (46) aufweist, die in der ersten Lage des Löschverriegelungselementes mit dem Fenster zusammenfällt und das Fenster völlig frei lässt.

3. Magnetbandkassette nach Anspruch 2, dadurch gekennzeichnet, dass die rechteckige Platte (45) auf einer ersten der kürzeren Seiten den Schieber (53) trägt, wobei die Platte durch den Schlitz (54) zwischen den angrenzenden Rändern der ersten Hauptwand (2) und der Rückwand (6) und an der gegenüberliegenden zweiten kürzeren Seite durch einen Rand (57) auf der zweiten Hauptwand (3) geführt wird.

4. Magnetbandkassette nach Anspruch 2 oder 3, dadurch gekennzeichnet, dass die Platte (45) erste und zweite Teile (51, 52) aufweist, die zwei einander gegenüberliegende Seiten der rechteckigen Öffnung (46) begrenzt, von welchen Teilen der erste das Fenster (47) in der zweiten Lage bedeckt und in der Richtung der Bewegung der Platte grösser ist als der zweite Plattenteil.

5. Magnetbandkassette nach Anspruch 3 und 4, dadurch gekennzeichnet, dass an der ersten kurzen Seite die Rechteckplatte (45) eine Zunge (48) aufweist, die das Steuerelement bildet und grenzend an die innere Seite der ersten Hauptwand (2) liegt und durch einen Träger (50) mit dem ersten Plattenteil (5) verbunden ist.

6. Magnetbandkassette nach Anspruch 4, dadurch gekennzeichnet, dass im wesentlichen halbwegs der zwei Hauptwände der zweite Plattenteil (52) einen Vorsprung (58) aufweist, der in Rillen (59, 60) auf der inneren Seite der Rückwand (2) zum Verriegeln des Löschverriegelungselementes (4) in der ersten und zweiten Lage gebracht werden kann, wobei diese Rillen sich von dem Rand der Rückwand (6) grenzend an die erste Hauptwand (2) im wesentlichen in einer Richtung senkrecht zu der Bewegungsrichtung der Platte (45) erstrecken.

7. Magnetbandkassette nach einem der Ansprüche 4 bis 6, dadurch gekennzeichnet, dass in der Rückwand (6) eine Öffnung (61) vorgesehen ist, durch die in der zweiten Lage des Löschverriegelungselementes (44) ein Stift in die Rechtecköffnung gesteckt und gegen eine Seite der Rechtecköffnung gebracht werden kann um zu vermeiden, dass die Platte (45) aus der zweiten Lage bewegt wird, während in der ersten Lage eine längere Seite der Platte neben der Öffnung in der Rückwand (6) sichtbar ist.

## Revendications

1. Cassette de bande magnétique qui comprend:

— un boîtier comportant deux parois principales parallèles (2, 3) en substance rectangulaires, deux parois latérales (4, 5), une paroi postérieure (6) et une paroi antérieure qui présente des ouvertures (7, 8),

— deux moyeux de bobines (11, 12) qui sont disposés entre les parois principales et qui peuvent tourner autour d'axes s'étendant perpendiculairement aux parois principales,

— une bande magnétique (13) qui est attachée à ses extrémités aux moyeux de bobines et est, au moins sur une partie de sa longueur, envidée sur les moyeux de bobines et qui s'étend, en outre, en travers d'un évidement (9) prévu dans l'avant du boîtier pour coopérer avec des parties d'un appareil à cassette de bande magnétique,

— une ouverture de détection (43) dans une des parois (2) près d'un coin du boîtier pour recevoir un élément détecteur de l'appareil à cassette de bande magnétique qui peut être engagé dans l'ouverture de détection,

— un organe antieffacement (44) qui est disposé au moins en partie à l'intérieur du boîtier et qui peut coulisser en substance en ligne droite entre une première position et une seconde position et peut être verrouillé dans ces positions,

— un élément de commande (48) qui fait partie intégrante de l'organe antieffacement, qui ferme l'ouverture de détection dans la première position et qui libère cette ouverture dans la seconde position,

— un élément d'actionnement (53) qui fait partie intégrante de l'organe antieffacement, qui est situé au côté extérieur du boîtier et qui permet de déplacer l'organe antieffacement à la main,

— une fenêtre (47) dans une des parois du boîtier, par laquelle la position de l'organe antieffacement peut être visuellement discernée,

— un élément indicateur (45) qui fait partie intégrante de l'organe antieffacement, qui laisse la fenêtre ouverte dans la première position et couvre la fenêtre dans la seconde position,

caractérisée en ce que

— la fenêtre (47) est située dans la paroi postérieure (6) du boîtier,

— l'ouverture de détection (43) est située dans une première paroi principale du boîtier,

— une fente (54) est formée du côté extérieur du boîtier en substance entre les bords adjacents de la première paroi principale (2) et de la paroi postérieure, et

— élément d'actionnement (53) comprend un curseur mobile qui est disposé dans la fente et présente une surface externe non lisse qui est disposée sur les côtés intérieurs des plans contenant les surfaces externes de la première paroi principale (2) et de la paroi postérieure (6).

2. Cassette de bande magnétique suivant la revendication 1, caractérisée en ce que l'organe antieffacement comprend une plaque plane en substance rectangulaire (45) qui constitue l'élément indicateur et qui peut coulisser le long du côté intérieur de la paroi postérieure (6) derrière la fenêtre (47) qui y est ménagée et présente une ouverture en substance rectangulaire (46) qui, dans la première position de l'organe antieffacement, coïncide avec la fenêtre et laisse cette fenêtre entièrement ouverte.

3. Cassette de bande magnétique suivant la revendication 2, caractérisée en ce que la plaque rectangulaire (45) porte le curseur (53) sur un premier des ses petits côtés, la plaque étant guidée au niveau de ce premier petit côté par la fente (54) prévue entre les bords adjacents de la première paroi principale (2) et de la paroi postérieure (6) et au niveau de son second petit côté, par une nervure (57) prévue sur la seconde paroi principale (3).

4. Cassette de bande magnétique suivant la revendication 2 ou 3, caractérisée en ce que la plaque (45) comprend une première et une seconde partie (51, 52) bordant deux côtés opposés de l'ouverture rectangulaire (46), la première de ces parties étant prévue pour couvrir la fenêtre (47) dans la seconde position et présentant des dimensions supérieures à celles de la seconde partie de la plaque dans le sens du déplacement de cette plaque.

5. Cassette de bande magnétique suivant les revendications 3 et 4, caractérisée en ce que sur son premier petit côté, la plaque rectangulaire (45) porte une oreille (48) qui constitue l'élément de commande et qui est disposée contre le côté intérieur de la première paroi principale (2) et est reliée à la première partie (51) de la plaque par un support (50)

6. Cassette de bande magnétique suivant la revendication 4, caractérisée en ce qu'en substance à mi-distance entre les deux parois principales, la seconde partie (52) de la plaque porte une saillie (58) qui peut être positionnée dans les rainures (59, 60) prévues dans le côté intérieur de la paroi postérieure (2) pour verrouiller l'organe antieffacement (44) dans la première et dans la seconde position, ces rainures partant du bord de la paroi postérieure (6) adjacent à la première paroi principale (2) et s'étendant dans une direction en substance perpendiculaire à la direction dans laquelle la plaque (45) se déplace.

7. Cassette de bande magnétique suivant l'une quelconque des revendications 4 à 6, caractérisée en ce que dans la paroi postérieure (6) est ménagée une ouverture (61) par laquelle, dans la seconde position de l'organe antieffacement (44), un ergot peut être introduit dans l'ouverture rectangulaire et peut être positionné contre un côté de cette ouverture rectangulaire de manière à empêcher la plaque (45) d'être écartée de la seconde position, tandis que dans la première position, un long côté de la plaque est disposé à côté de l'ouverture de la paroi postérieure (6).

FIG.1

0 091 171

0 091 171

FIG.2

FIG.3

FIG.4

FIG.5